# EUROPEAN PATENT SPECIFICATION

(11) **EP 4 320 820 B1**
(45) Date of publication and mention of the grant of the patent: **02.12.2026**
(21) Application number: 22784273.9
(22) Date of filing: 05.04.2022
(51) Int. Cl.: H04W 12/088, H04L 9/40, H04L 67/306, H04L 67/30, H04W 88/16, H04W 8/18

(54) **SYSTEM AND METHOD FOR SECURING COMMUNICATION AND INFORMATION OF MOBILE DEVICES THROUGH A CONTROLLED CELLULAR COMMUNICATION NETWORK**
SYSTEM UND VERFAHREN ZUR SICHERUNG DER KOMMUNIKATION UND INFORMATIONEN MOBILER VORRICHTUNGEN ÜBER EIN GESTEUERTES ZELLULARES KOMMUNIKATIONSNETZWERK
SYSTÈME ET PROCÉDÉ PERMETTANT DE SÉCURISER UNE COMMUNICATION ET DES INFORMATIONS DE DISPOSITIFS MOBILES VIA UN RÉSEAU DE COMMUNICATIONS CELLULAIRES PILOTÉ

(30) Priority: 06.04.2021 US 202163171286 P
(43) Date of publication of application: 14.02.2024
(73) Proprietor: Firstpoint Mobile Guard Ltd., 4265574 Netanya (IL)
(72) Inventor: WEINBERG, Adam, 4265574 Netanya (IL); KLEINEWOERDEMANN, Frank, 5332020 Givatayim (IL)
(74) Representative: Balder IP Law, S.L.
(86) International application number: PCT/IL2022/050355
(87) International publication number: WO 2022/215070

(56) References cited:
- WO-A1-2018/231855
- US-A1- 2008 282 338
- US-A1- 2018 367 569
- US-A1- 2019 261 172
- US-A1- 2019 306 200
- US-A1- 2019 387 399

## Description

### FIELD OF THE INVENTION

The present invention generally relates to the field of cellular networks. More specifically, it addresses issues of communication and data security and privacy over cellular networks.

### BACKGROUND OF THE INVENTION

The abundance and diversity of threats to security and privacy over cellular networks is a well-established fact. Perpetrators may tap into various sources of data that are either stored on or communicated with any cellular device. For example, they may violate the privacy of cellular network subscribers by gaining access to stored files and private information, remotely operating the cellular device's camera and microphone, implanting malicious software, and even obtaining knowledge of their physical whereabouts.

Mobile phones as well as other portable devices that are employed for business use typically possess a wide variety of communication interfaces, each of which is vulnerable to cyber-attacks. Examples for such interfaces are:
- Voice calls;
- Text messages;
- Private emails and company emails;
- Private apps, and company apps;
- Access to company databases, business calendars and customer data; and
- Any type of media

Attackers may choose to hack data pertaining to a cellular subscriber through a variety of methods. Examples for such methods include:
- International Mobile Subscriber Identity (IMSI) catcher;
- Man-in-the-middle (MitM) attacks;
- Network attacks, e.g. by exploiting Signaling System 7 (SS7) loopholes; and
- Different types of social engineering methods, for the purpose of information gathering, fraud, or gaining system access.

Attackers may choose to interface the target User Cellular Device (UCD) through a variety of access points, e.g. through the cellular network, Wi-Fi, Bluetooth or a USB connection.

Attackers may choose to target 'ordinary' cellular network interfacing devices (e.g. smartphones, tablets and laptop computers) as well as Internet of Things (IoT) devices, such as Machine to Machine (M2M) and connected cars.

Attackers may choose to target personal information stored on cellular devices (e.g. passwords), in order to ultimately target data that is stored elsewhere (e.g. email or drop-box accounts).

Prior art includes tools that provide some degree of security by monitoring the activity on the UCD from the end-users' perspective, such as various anti-malware software tools. Such tools are limited in their scope of response to threats:
- They require installation of the security tool on the UCD, and rely on updates from external sources;
- They do not relate to threats posed to the UCD from the cellular network's perspective; and
- They do not control the interaction of cellular subscribers with the hosting network.

Some network security solutions (e.g. US2016226913: "Technologies For Scalable Security Architecture Of Virtualized Network" and US20160308837: "Methods And Apparatus To Configure Virtual Private Mobile Networks For Security ") disclose methods for securing the functionality of modules of the cellular network, but do not directly address UCD data security and the privacy of cellular network subscribers.

The disclosed invention addresses the issue of cellular security in a comprehensive perspective, addressing threats of multiple categories and sources, from both the UCD's and the network's perspective.

Beer (US 2008/282338 A1, D3) discloses an early framework for applying firewall policies to mobile network subscribers at the network level, wherein security enforcement rules are associated with individual subscriber identities. While this approach introduces the concept of subscriber-specific network-side policy enforcement, it does not contemplate group-based rule structuring or a layered, graph-organized firewall architecture capable of handling both individual and collective subscriber profiles simultaneously.

Weinberg et al. (US 2019/387399 A1, D2), assigned to Firstpoint Mobile Guard Ltd., discloses a Controlled Cellular Network (CCN) system and method for securing the privacy of cellular subscribers and the data stored on their User Cellular Devices (UCDs). The CCN encapsulates communications between UCDs and the hosting PLMN - including control, signaling, SMS, and data traffic - and analyzes the encapsulated communications to identify security threats, determine their category and probability, and respond in real or near-real time. While D2 provides an effective threat-detection layer at the network level, it does not disclose a two-layer security rule architecture distinguishing between individual subscriber identity and group-based policies, nor does it disclose the application of firewall rules by tracing a path through a graph structure of rule nodes.

Palo Alto Networks (WO 2018/231855 A1, D1) discloses security enforcement for mobile and IoT networks using next-generation firewalls deployed at security gateways within or adjacent to the cellular infrastructure. D1 describes filtering and blocking of subscriber traffic based on device and user identifiers such as IMEI, IMSI, location, and Application-ID, utilizing deep packet inspection (DPI) techniques. While D1 represents an advanced approach to mobile network security, its enforcement model is based on a flat rule evaluation applied to individual device or user attributes at a centralized security platform. D1 does not disclose a hierarchical, two-layer rule structure that separately governs individual subscriber profiles and group affiliations, nor does it disclose a graph-structured firewall node arrangement in which a sequence of rules applicable to a specific subscriber request is determined by tracing a path through interconnected firewall nodes.

### SUMMARY OF THE INVENTION

The present invention provides A method for securing the data communication of cellular network subscribers using a security service, said method comprising:
- associating subscribers listed to the security service with a group. wherein the group association for each subscriber is determined a-priory, based on the identity of the subscriber, or dynamically, based on the communication pattern of the subscriber;
- Configuring the cellular network connectivity to the public PDN with at least one security GW, such that data flow of the subscribers listed to the security service is routed through the at least one security GW;
- applying plurality security rules comprising group related rules and individual related rules associated with by at least one the security GW., wherein the security rules are configured for inspecting the data communication and determining if to block or allow the data communication;

wherein plurality of the security rules applied in the security GW are implemented in two layers: a first layer which is determined by the individual identity of the subscriber and a second layer which is based on the group to which the subscriber is associated.
Wherein the Security rules applied at the group layer are bypassed for specific individual rules;
applying the plurality of security rules relevant for user ID profile and associated group by tracing the rules at each firewall nodes

According to some embodiments of the present invention the group are determined based on at least one of, device type specific, usage type specific, device owner specific;
wherein the security rules are implemented on virtualized computing entities (containers) in a swarm deployment of firewalls nodes;
wherein the mobile subscriber address is assigned by the system upon network connection, wherein a routing path through the container swarm (individual and group level) is established upon address assignment.
wherein the security profiles defined for the subscriber and its group are applied to the firewall nodes along the routing path and applied to data traversing in either direction along that path.
wherein the security associated with group and/or individual rules for the data protection engines (subscriber/individual and group level) are generated dynamically based on abstract rules including at least one of destination IP geo-fence, and/or static rules including at least one of list of specific addresses, protocols, time.

According to some embodiments of the present invention the security GW is connected to feeds of threat intelligence providers wherein the data retrieved from the feeds are validated and adapted to the system format, wherein the threat intelligence feed source can be selected on individual and as well as group level.

According to some embodiments of the present invention the DNS based protection is applied by
supplying DNS services to the protected mobile devices (the devices listed to the protection service).
Wherein the usage of the designated DNS is enforced by a rule being part of the security profile defined for that subscriber, such that an attempt to bypass the designated DNS is notified and corrected if such rule exists on the subscriber security profile.

According to some embodiments of the present invention the system rebuilds a DNS cache individually for the subscriber based on the individual DNS traffic analyzed by the system, wherein Device communication is been analyzed passively to determine whether the peer address was resolved through a DNS query or not, wherein the system applies security rules (pass, alert/notify, block) based on this analysis.

According to some embodiments of the present invention wherein the DNS queries are escalated to verified service providers by secure (encrypted) protocol and the DNS query response is sanitized by the system.

According to some embodiments of the present invention the re-routing detection and protection is applied, by using a SIM applet functionality for verifying the data path between each protected individual device and the data protection system, wherein the functionality is achieved by establishing an independent network IP connectivity from the SIM applet to the security system (e.g. BIP connectivity), and verifying that this connectivity is handled through the designated security GW.

According to some embodiments of the present invention the re-routing detection and protection is applied by detecting absence of communication from the subscriber through the security GW for above a predefined time period.

The present invention provides a method for securing the data communication of cellular network subscribers using a security service, said method comprising:
- associating subscribers listed to the security service with a group.
- Configuring the cellular network connectivity to the public PDN with at least one security GW, such that data flow of the subscribers listed to the security service is routed through the at least one security GW;
- applying plurality of security rules comprising group related rules and individual related rules associated with by at least one the security GW., wherein the security rules are configured for inspecting the data communication and determining if to block or allow the data communication;

wherein plurality of the security rules applied in the security GW are implemented in two layers: a first layer which is determined by the individual identity of the subscriber and a second layer which is based on the group to which the subscriber is associated.
applying the plurality of security rules relevant for user ID profile and associated group by tracing the rules at each firewall nodes.

According to some embodiments of the present invention the group association for subscriber is determined dynamically, based the communication pattern of the subscriber.

According to some embodiments of the present invention the group association per subscriber is determined a-priory based on the identity of the subscriber or device type specific or device owner specific, usage type.

According to some embodiments of the present invention the security rules are implemented on virtualized computing entities (containers) in a swarm deployment of firewalls nodes.

According to some embodiments of the present invention the mobile subscriber address is assigned by the system upon network connection, wherein a routing path through the container swarm (individual and group level) is established upon address assignment.

According to some embodiments of the present invention the security profiles are defined for the subscriber and its group are applied to the firewall nodes along the routing path and applied to data traversing in either direction along that path.

According to some embodiments of the present invention the security rules associated with group and/or individual rules for the data protection engines (subscriber/individual and group level) are generated dynamically based on abstract rules including at least one of destination IP geo-fence and/or static rules including at least one of list of specific addresses, protocols, time.

According to some embodiments of the present invention the security GW is connected to feeds of threat intelligence providers wherein the data retrieved from the feeds are validated and adapted to the system format, wherein the threat intelligence feed source can be selected on individual and as well as group level.

According to some embodiments of the present invention the Security rules applied at the group layer are bypassed for specific individual rules;

According to some embodiments of the present invention the DNS based protection is applied by supplying DNS services to the devices listed to the protection service ("protected mobile devices").
Wherein the usage of the designated DNS is enforced by a rule being part of the security profile defined for that subscriber, such that an attempt to bypass the designated DNS is notified and corrected if such rule exists on the subscriber security profile.

According to some embodiments of the present invention the system rebuilds a DNS cache individually for the subscriber based on the individual DNS traffic analyzed by the system, wherein device communication is been analyzed passively to determine whether the peer address was resolved through a DNS query or not, wherein the system applies security rules including at least one of pass, alert/notify, block.

According to some embodiments of the present invention the DNS queries are escalated to verified service providers by secure (encrypted) protocol and the DNS query response is sanitized by the system.

According to some embodiments of the present invention the re-routing detection and protection is applied, by using a SIM applet functionality for verifying the data path between each protected individual device and the data protection system, wherein the functionality is achieved by establishing an independent network IP connectivity from the SIM applet to the security system (e.g. BIP connectivity), and verifying that this connectivity is handled through the designated security GW.

According to some embodiments of the present invention the re-routing detection and protection is applied by detecting absence of communication from the subscriber through the security GW for above a predefined time period.

The present invention provides a system for securing the data communication of cellular network subscribers using a security service, said system comprised of:
- Controller configured for identifying client profile and associated groups Managing the address assigned to each of the UCD and determines personal/customized rules;
- at least one security GW for Configuring the cellular network connectivity to the public PDN with, such that data flow of the subscribers listed to the security service is routed through the at least one security GW;
- group and personal firewalls for applying plurality of security rules comprising group related rules and individual related rules associated with by at least one the security GW, wherein the security rules are configured for inspecting the data communication and determining if to block or allow the data communication;

wherein plurality of the security rules applied in the security GW are implemented in two layers: a first layer which is determined by the individual identity of the subscriber and a second layer which is based on the group to which the subscriber is associated.
applying the plurality of security rules relevant for user ID profile and associated group by tracing the rules at each firewall nodes.

According to some embodiments of the present invention wherein the group association for subscriber is determined dynamically, based the communication pattern of the subscriber.

According to some embodiments of the present invention the group association per subscriber is determined a-priory based on the identity of the subscriber or device type specific or device owner specific, usage type. According to some embodiments of the present invention the security rules are implemented on virtualized computing entities (containers) in a swarm deployment of firewalls nodes.

According to some embodiments of the present invention the mobile subscriber address is assigned by the system upon network connection, wherein a routing path through the container swarm (individual and group level) is established upon address assignment.

According to some embodiments of the present invention the security profiles are defined for the subscriber and its group are applied to the firewall nodes along the routing path and applied to data traversing in either direction along that path.

According to some embodiments of the present invention the security rules associated with group and/or individual rules for the data protection engines (subscriber/individual and group level) are generated dynamically based on abstract rules including at least one of destination IP geo-fence and/or static rules including at least one of list of specific addresses, protocols, time.

According to some embodiments of the present invention the security GW is connected to feeds of threat intelligence providers wherein the data retrieved from the feeds are validated and adapted to the system format, wherein the threat intelligence feed source can be selected on individual and as well as group level.

According to some embodiments of the present invention the DNS based protection is applied by
supplying DNS services to the devices listed to the protection service ("protected mobile devices").
Wherein the usage of the designated DNS is enforced by a rule being part of the security profile defined for that subscriber, such that an attempt to bypass the designated DNS is notified and corrected if such rule exists on the subscriber security profile.

According to some embodiments of the present invention the system rebuilds a DNS cache individually for the subscriber based on the individual DNS traffic analyzed by the system, wherein Device communication is been analyzed passively to determine whether the peer address was resolved through a DNS query or not, wherein the system applies security rules including at least one of pass, alert/notify, block).

According to some embodiments of the present invention the DNS queries are escalated to verified service providers by secure (encrypted) protocol and the DNS query response is sanitized by the system.

According to some embodiments of the present invention in which re-routing detection and protection is applied, by using a SIM applet functionality for verifying the data path between each protected individual device and the data protection system, wherein the functionality is achieved by establishing an independent network IP connectivity from the SIM applet to the security system (e.g. BIP connectivity), and verifying that this connectivity is handled through the designated security GW.

According to some embodiments of the present invention the re-routing detection and protection is applied by detecting absence of communication from the subscriber through the security GW for above a predefined time period.

According to some embodiments of the present invention the Security rules applied at the group layer are bypassed for specific individual rules.

### BREIF DESCRIPTION OF THE DRAWINGS

Figure 1 illustrate a block diagram, depicting the messaging security platform, according to prior art.
Figure 2 illustrate a block diagram depicting the messaging security platform, according to some embodiments of the present invention.
Figure 3 illustrate a block diagram, depicting the messaging security platform, according to some embodiments of the present invention.
Figure 4 is a block diagram which depicts depicting the messaging security platform, including option of visited network according to some embodiments of the present invention.
Figures 5A &B is a block diagram which configuration of subscriber and group firewalls according to some embodiments of the present invention.
Figure 6 is a flow diagram of routing secured message according to the configuration of fig 3, according to some embodiments of the present invention.
Figure 7 is a flow diagram of the action performed by the firewall instance, according to some embodiments of the present invention.
Figure 8 is a flow diagram of firewall path routing, according to some embodiments of the present invention.
Figure 9 is a flow diagram of the action performed by the DNS, according to some embodiments of the present invention.
Figure 10 is a flow diagram of re-routing of secured message protection according to the configuration of fig 4, according to some embodiments of the present invention.
Figure 11 is a flow diagram of routing secured message according to the configuration of fig 3, according to some embodiments of the present invention.
Figure 12 is a flow diagram of firewall path routing and controller actions, according to some embodiments of the present invention.
Figure 13 is a flow diagram of the action performed by the DNS, according to some embodiments of the present invention
Figure 14 is a flow diagram of routing secured message action between the UCD and the data protection system according to the configuration of fig 3, according to some embodiments of the present invention.

### DETAILED DESCRIPTION OF SOME EMBODIMENTS OF THE INVENTION

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

Following is a table of definitions of the terms used throughout this application.

| Term | Definition | |
|---|---|---|
| PLMN, Visited PLMN, Home PLMN, hosting PLMN | A public land mobile network (PLMN) is a wireless communication system that provides communication signals through the use of land-based transmitters to a plurality of subscribed users. | |
| | A "Home PLMN" is a land based mobile communication system where the user is registered for service. | |
| | A "Visited PLMN" is a PLMN other than the Home PLMN, which currently accommodates cellular communication for a user registered for service on the Home PLMN. | |
| | Throughout this application, we have used the term "Hosting PLMN" to describe a PLMN which currently accommodates cellular communication for a user, regardless of the Home PLMN upon which the user is registered for service. | |
| User Cellular Device(s) (UCD) | The term User Cellular Device(s) (UCD) is used throughout this application to describe user-end cellular appliances which utilize the hosting PLMN to connect to a cellular network. | |
| | It is to be made clear that the term UCD is used herein for the purpose of brevity, to describe any type of cellular appliance (e.g.: cellular phones, smartphones, tablet computers, laptop computers, IoT devices, M2M devices, connected cars etc.), connected by the hosting PLMN to a cellular network of any standard (e.g.: GSM, 3GPP, LTE). | |
| Subscriber Identity Storage Element (SISE) | The term "Subscriber Identity Storage Element" (SISE) is used throughout this document to describe any type of element that stores parameters of the subscriber's UCD identity (e.g.: IMSI, Ki, Kc). | |
| | The SISE may be implemented as Universal Integrated Circuit Card attached to the UCD (e.g. UICC, SIM card, USIM card) or as a module embedded within the UCD Hardware and Software (e.g. EUICC, ESIM). | |
| Cellular Controlled Network (CCN) | A system designed to enhance the privacy of cellular subscribers of a hosting PLMN, and the security of data stored on their UCD. | |
| | The CCN comprises of one or more controlled modules (300, 350, 400, 500, 550, 800, 850). Each said controlled modules may be implemented as any combination of hardware and software (e.g. on dedicated machines or as services on the hosting PLMN machines). | |
| | For the purpose of clarification, the interface between the hosting PLMN and the CCN may be described as similar (but not identical) to the interface of a Mobile Virtual Network Operator (MVNO) network to a Mobile Virtual Network Enabler (MVNE) network. | |
| | This interface accommodates the flow of data between the hosting PLMN and the CCN, and enables the CCN to provide serviced subscribers at least part of the following functionality: | |
| | | • Mobility Management (MM) of the user; |
| | | • Short Message Services (SMS); |
| | | • Supplementary Services (SS); |
| | | • Intelligent Networks (IN) aspects; |
| | | • Handling user data communication; |
| | | • Signaling of incoming calls and SMS; |
| | | • Incoming and outgoing USSD; and |
| | | • All CAMEL transactions. |
| | The CCN encapsulates communication between the UCD and the hosting PLMN, analyzes this communication in respect to each serviced subscriber, and provides them with the said security services, as elaborated below. | |
| Serviced subscribers | A subset of subscribers of the hosting PLMN, for whom the CCN provides security services, according to predefined subscriber profiles. | |
| Controlled modules | Modules comprising the CCN, each configured to complement the functionality of respective elements of the hosting cellular PLMN, and are configured, monitored and controlled by the Security center module [1000]. | |
| | For example, the controlled SMSC module [400] complements the functionality of the SMSC module in cellular systems. It is responsible for routing Short Messages (SMS, EMS, MMS, USSD) between the CCN [100] and the hosting PLMN [200]. | |
| Lifeline | A two-way communication channel between serviced subscribers' UCD and the security action management module (sub-module of the CCN). | |
| | According to one embodiment, the Lifeline channel is implemented as switched packet data communication over the Internet, with SMS or USSD based communication fallback over the cellular hosting PLMN. | |
| | Failure to receive Lifeline communication (on either the security action management module side or on the UCD side) may indicate an attempt to hijack the UCD to another network. | |
| UCD Lifeline Module (ULM) | The UCD Lifeline Module (ULM) is optionally installed on serviced subscribers UCDs, and may be implemented by any combination of hardware and software (e.g. as a SIM applet or an application or service running in the UCD's background). | |
| | The ULM stores modules of instruction code which, when executed, configure the UCD to maintain a continuous two-way communication channel with the security action management module. | |

A system/solution for protecting cellular mobile devices against cyber-attack. The system/solution includes the following:
The solution is aimed in providing the protection only to designated mobile subscribers which are listed to the protection service (not to all users or devices of the cellular network)

The cellular network data flow of the listed subscribers is configured so that the connectivity to the (possibly hostile) public PDN (i.e.to the Internet) is routed through a dedicated security GW. One possibility for achieving this is by using a dedicated APN to be installed on the protection service listed devices. Another possibility (generalization) is that the there are several such dedicated security GWs, each security server is allocated to certain sub-set of the protected subscribers - so that each such sub-set of devices is connected to the PDN through a another security GW. The clustering can be based on issues like: distinction of the applied security features of the sub-set, need of the relevant users to be separated for management and internal security reasons, scalability and processing power need, and more.

In the security GW (either single or several) several data protection features are applied, as further detailed bellow:
Destination based protection:
   a. Each protected mobile device is member of a group (ad hoc, device type specific, usage type specific, device owner specific, etc.).
   b. The individual protection is applied on two levels: personal and group.
   c. The data protection features are implemented on virtualized computing entity (container) in swarm deployment.
   d. The mobile subscriber address is assigned by the system upon network connection. A routing path through the container swarm (individual and group level) is established upon address assignment.
   e. The security profiles defined for the subscriber and its group are applied to the nodes along the routing path and applied to data traversing in either direction along that path.
   f. Access security rules for the data protection engines (subscriber and group level) are generated dynamically based on abstract rules e.g. destination IP geo-fence as well as static rules e.g. list of specific addresses, protocols, time etc.
   g. The system may be connected to feeds of thread intelligence providers (public, commercial or private). The data retrieved from the feeds are validated and adopted to the system format. The threat intelligence feed source can be selected on individual and as well as group level.
   h. The system provides means to bypass group level security rules for specific traffic on individual level e.g. allow specific application traffic despite prohibitive group rules.
DNS based protection
   a. The system supplies DNS services to the protected mobile devices (the devices listed to the protection service).
   b. The usage of the designated DNS is enforced by a rule being part of the security profile defined for that subscriber. An attempt to bypass the designated DNS is notified and corrected if such rule exists on the subscriber security profile.
   c. The system rebuilds a DNS cache individually for the subscriber based on the individual DNS traffic analyzed by the system. Device communication is been analyzed passively to determine whether the peer address was resolved through a DNS query or not. The system applies security rules (pass, alert/notify, block) based on this analysis.
   d. DNS queries are escalated to verified service providers by secure (encrypted) protocol and the DNS query response is sanitized by the system.
Re-routing protection
   a. Option A: a SIM applet functionality is used to verify the data path between each protected individual device and the data protection system. This is achieved by establishing an independent network IP connectivity from the SIM applet to the security system (e.g. BIP connectivity), and verifying that this connectivity is handled through the designated security GW.
   b. Option B: Alternatively, the absence of communication from the subscriber through the security GW for a long time is considered suspicious.
   c. Deviations are considered as suspicious and notified to the device owner/operator and/or its organization.
   d. By path protection

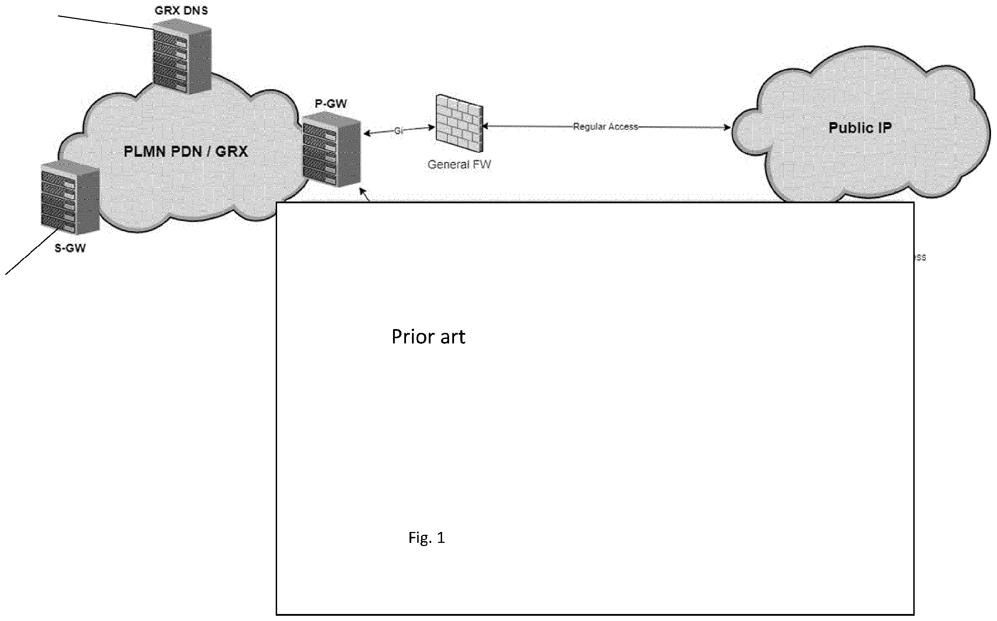

Figure 1 illustrate a block diagram, depicting the messaging security platform, according to prior art.

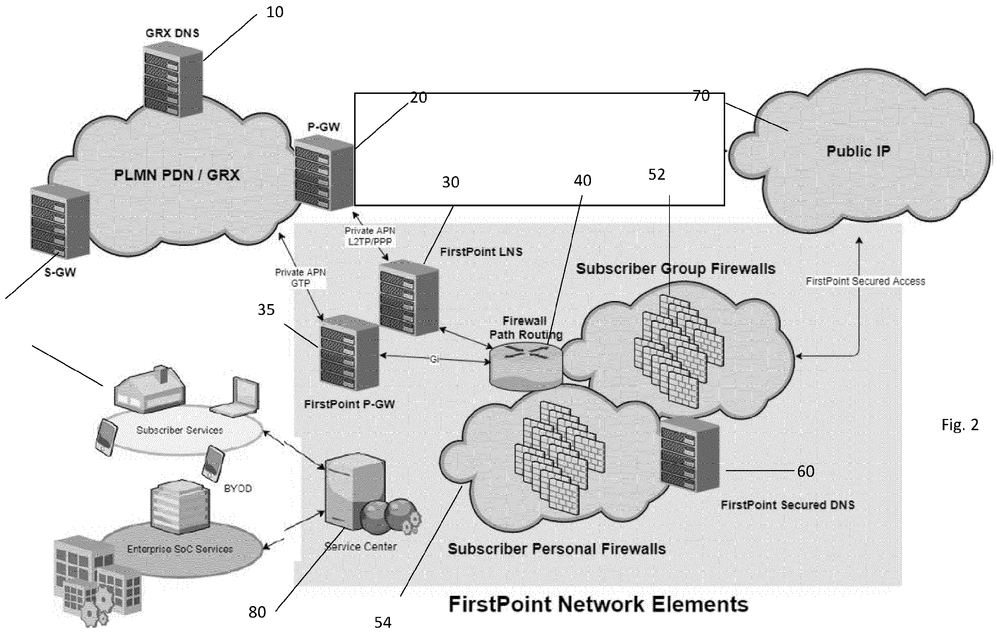

Figure 2 illustrate a block diagram depicting the messaging security platform, according to some embodiments of the present invention.

The messaging security platform is comprised of data domain protection consisting of group and personal firewalls nodes 52, 54, which check the user messages requests which are delivered from user though PLMN/PDN/GRX network, using PGW 20 and/or designated PGW 35, or Designated LNS , which routs the messages to customized/personalized path (using firewall path routing (4).

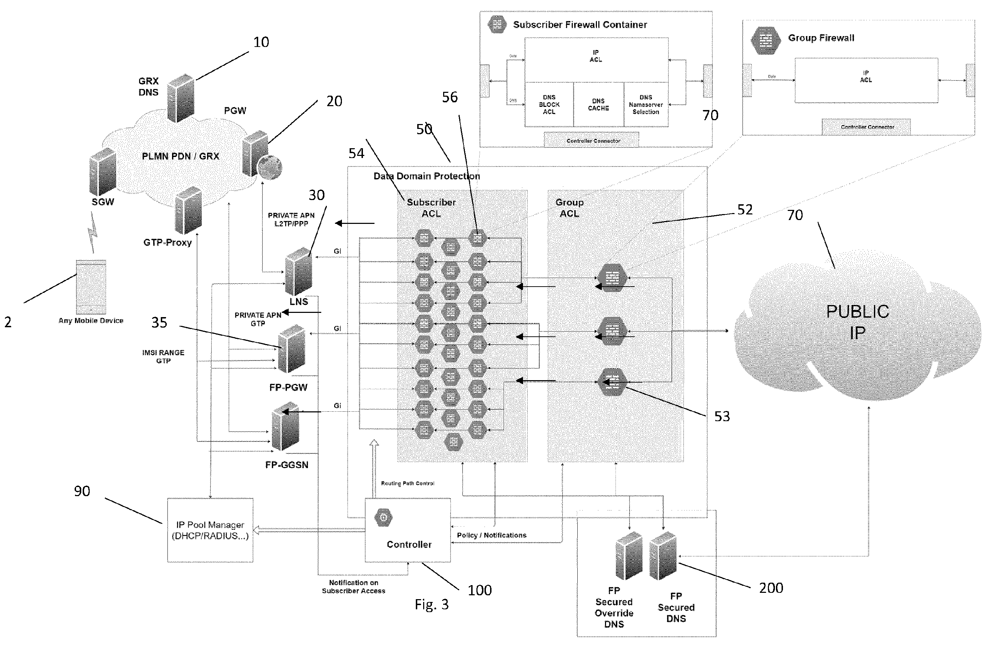

Figure 3 illustrate a block diagram, depicting the messaging security platform, according to some embodiments of the present invention.

The messaging security platform is comprised of data domain protection consisting of group and personal firewalls nodes 52, 54, which check the user messages requests which are delivered from user though PLMN/PDN/GRX network, using PGW 20 and/or designated PGW 35, or Designated LNS , which routs the messages to customized/personalized path (using firewall path routing (4).

The personal and group fire wall nodes are arranged in a graph structure of multiple nodes 56 and 53 respectively, each node including specific rules. By specifying a path through the graph structure are determined sequence of rules a specific request of user is tested by.

Controller 100 identifies client profile and associated groups Managing the address assigned to each of the UCD and determines personal/customized rules, the groups are either pre-defined or created ad hoc or based on user profiles for applying destination-based protection which is customized to user profile and group.

The IP poll manager manages the address assigned to each of the UCD.

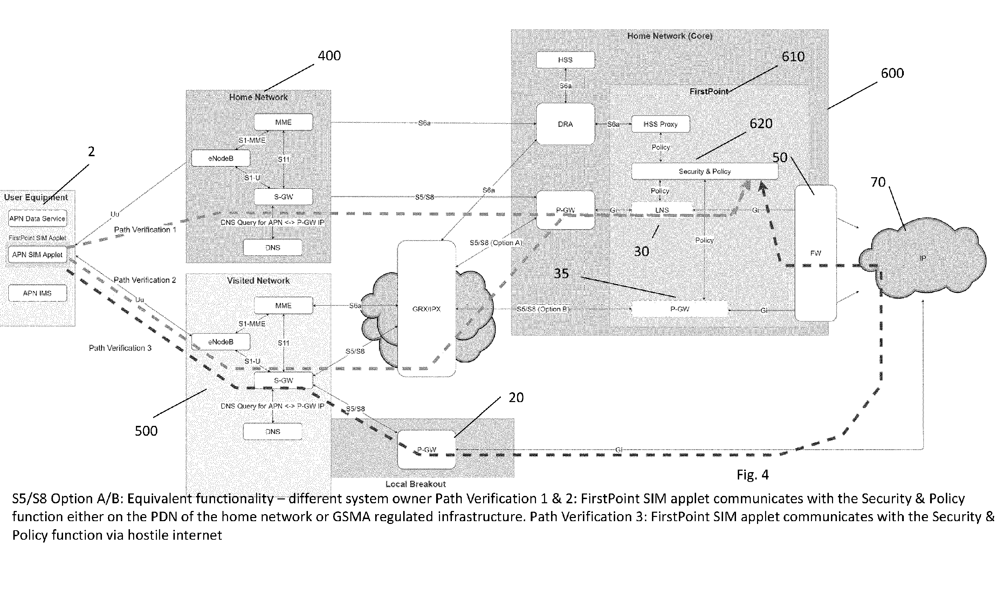

Figure 4 is a block diagram which depicts depicting the messaging security platform, including option of visited network according to some embodiments of the present invention.

The is diagram show different information flow of the message routing in different network configuration of equivalent functionality with different system owner (service provider or designated security service provided based present invention technology Path Verification 1 of one possible configuration disclose using designated security SIM applet, which communicates with the Security & Policy function either on the PDN of the home network.

Path Verification 2 of one possible configuration disclose using designated security SIM applet, which communicates with the Security & Policy function on the PDN of GSMA regulated infrastructure.

Path Verification 3: designated security SIM applet communicates with the Security & Policy function via hostile internet, in which the communication is routed through unknown server.

All communication paths end at the home networker core, which implements the security platform 106 as suggested by the present invention, which include the security policy as suggested by the present invention

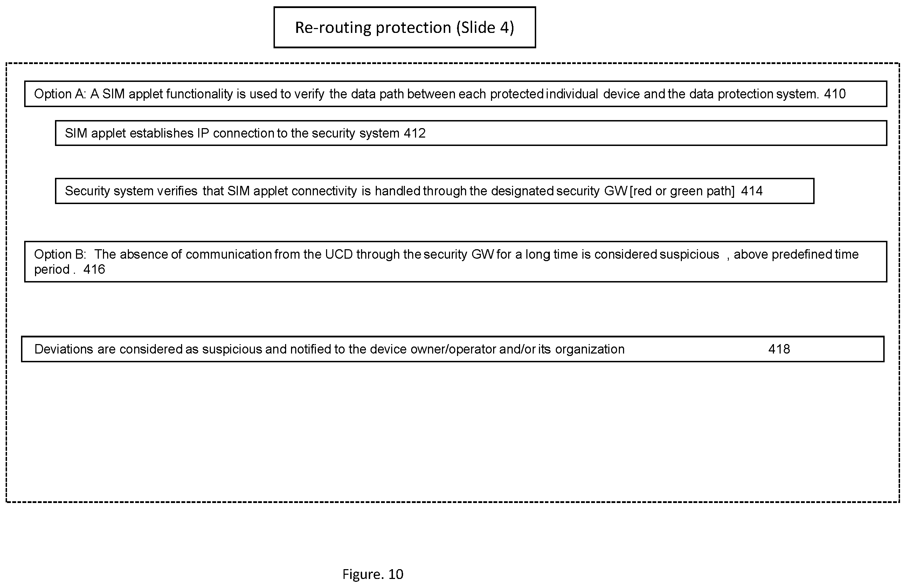

See figure 10 for information flow for this block diagram.

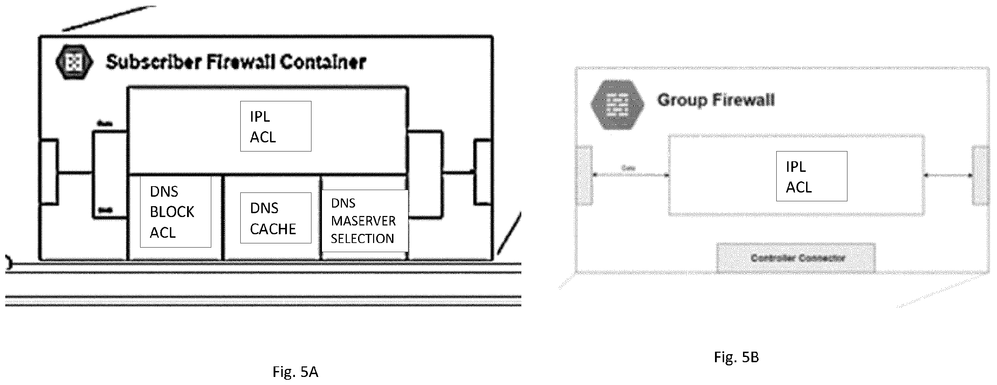

Figures 5A &B is a block diagram which configuration of subscriber and group firewalls according to some embodiments of the present invention.

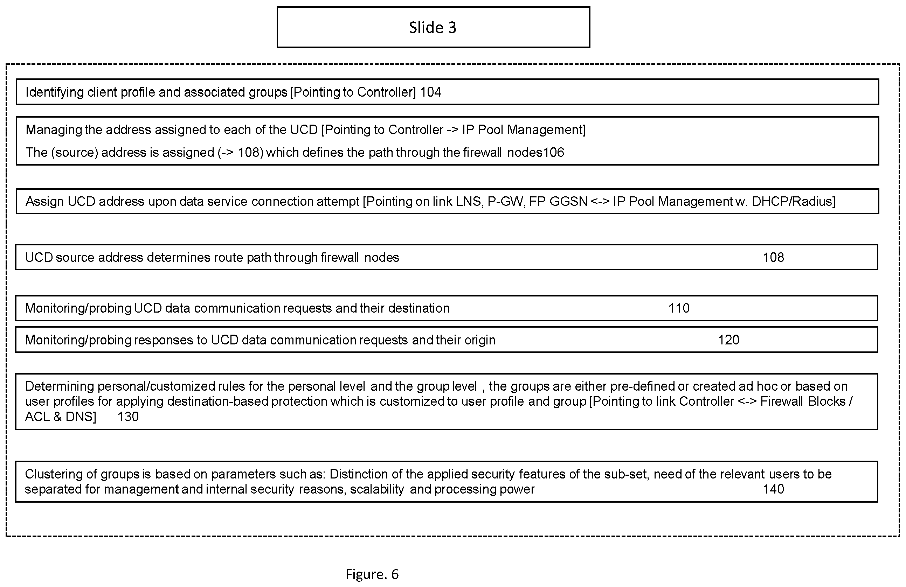

Figure 6 is a flow diagram of routing of secured message according to the configuration of fig 3, according to some embodiments of the present invention.

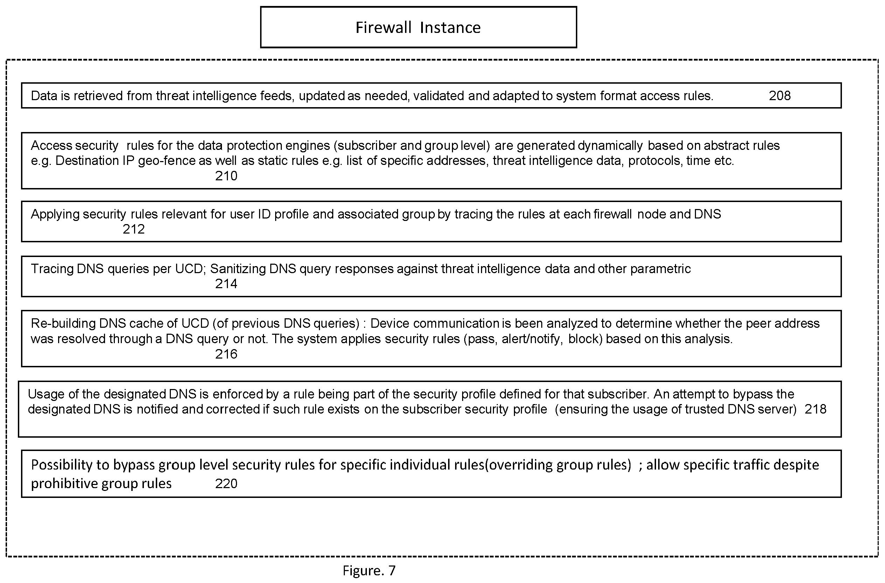

The routing of secured message includes at least one of the following steps:
Identifying client profile and associated groups by Controller 104;
Managing the address assigned to each of the UCD by the Controller 100 using IP Pool Management 106
Assign UCD address upon data service connection attempt by the IP pool management module [Pointing on link LNS, P-GW, FP GGSN <-> IP Pool Management w. DHCP/Radius ???)
determines the route path through firewall nodes is determined by UCD the source address 108
Monitoring/probing UCD data communication requests and their destination 110
Monitoring/probing responses to UCD data communication requests and their origin 120;
Determining by the controller personal/customized rules for the personal level and the group level, the groups are either pre-defined or created ad hoc or based on user profiles for applying destination-based protection which is customized to user profile and group [Pointing to link Controller <-> Firewall Blocks / ACL & DNS] 130
Clustering of groups is based on parameters such as: Distinction of the applied security features of the sub-set, need of the relevant users to be separated for management and internal security reasons, scalability and processing power ['Layout' of the blue/green areas]
Figure 7 is a flow diagram of the action performed by the firewall instance, according to some embodiments of the present invention.

The firewall processing includes at least one of the following steps:
Data is retrieved from threat intelligence feeds, updated as needed, validated and adapted to system format access rules. 208
Access/security rules for the data protection engines (subscriber and group level) are generated dynamically based on abstract rules, e.g. Destination IP geo-fence as well as static rules e.g. list of specific addresses, threat intelligence data, protocols, time etc. 210
Applying security rules relevant for user ID profile and associated group by tracing the rules at each firewall node and DNS; 212
Tracing DNS queries per UCD and Sanitizing DNS query responses against threat intelligence data and other parametric 214;
Re-building DNS cache of UCD: Device communication is been analyzed to determine whether the peer address was resolved through a DNS query or not. The system applies security rules (pass, alert/notify, block) based on this analysis,216;
Usage of the designated DNS is enforced by a rule being part of the security profile defined for that subscriber. An attempt to bypass the designated DNS is notified and corrected if such rule exists on the subscriber security profile 218;
Possibility to bypass group level security rules for specific; allow specific traffic despite prohibitive group rules 220;

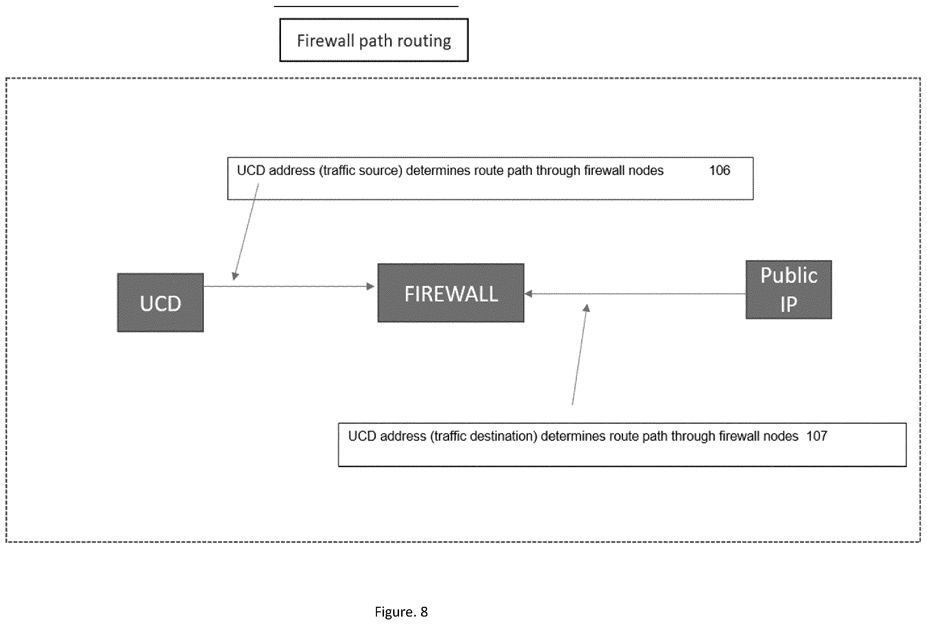

Figure 8 is a flow diagram of firewall path routing, according to some embodiments of the present invention.

According to this flow the route path through firewall nodes is determined based on UCD source address.

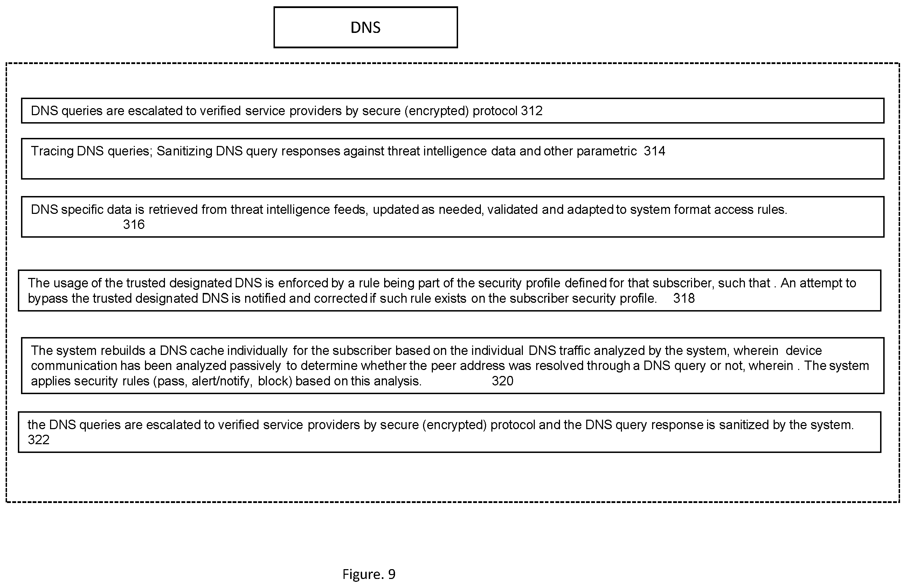

Figure 9 is a flow diagram of the action performed by the DNS, according to some embodiments of the present invention.

The actions performed by the DNS include at least one of the following steps:
DNS queries are escalated to verified service providers by secure (encrypted) protocol 312;
Tracing DNS queries; Sanitizing DNS query responses against threat intelligence data and other parametric 314;
DNS specific data is retrieved from threat intelligence feeds, updated as needed, validated and adapted to system format access rules.316
The usage of the designated DNS is enforced by a rule being part of the security profile defined for that subscriber, such that. An attempt to bypass the designated DNS is notified and corrected if such rule exists on the subscriber security profile.318
The system rebuilds a DNS cache individually for the subscriber based on the individual DNS traffic analyzed by the system, wherein. Device communication is been analyzed passively to determine whether the peer address was resolved through a DNS query or not, wherein. The system applies security rules (pass, alert/notify, block) based on this analysis. 320
the DNS queries are escalated to verified service providers by secure [0080] (encrypted) protocol and the DNS query response is sanitized by the system. 322
Figure 10 is a flow diagram of re-routing of secured message protection according to the configuration of fig 4, according to some embodiments of the present invention.

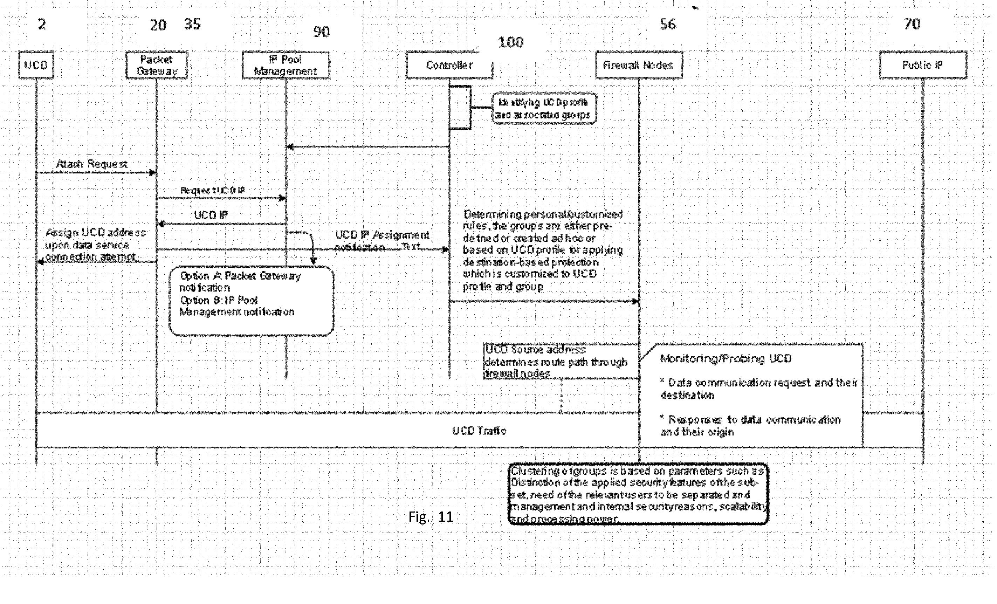

The re-routing of secured message protection comprises at least one of the following steps:
Option A: A SIM applet functionality is used to verify the data path between each protected individual device and the data protection system. 410
SIM applet establishes IP connection to the security system 412
Security system verifies that SIM applet connectivity is handled through the designated security GW [red or green path] 414
Option B: The absence of communication from the UCD through the security GW for a long time is considered suspicious. 416
Deviations are considered as suspicious and notified to the device owner/operator and/or its organization 418
Figure 11 is a flow diagram of routing secured message according to the configuration of fig 3, according to some embodiments of the present invention.

The routing of secured message comprises at least one of the following steps:
Sends, Attach Request from the USD 2 to the packet gateway (20,35), Request UCD IP from the IP poll management (90), based on received UCD IP, assign UCD Address upon service connection;
Identifying UCD profile and associated groups, by the controller 100 and
Determining personal/customized rules, the groups are either pre-defined or created ad hoc or based on UCD profile for applying destination-based protection which is customized to UCD profile and group;
The UCD Source address determines route path through firewall nodes;
Monitoring/Probing UCD communication including: Data communication request and their destination, Responses to data communication and their origin;
Clustering of groups is based on parameters such as: Distinction of the applied security features of the sub-set, need of the relevant users to be separated and management and internal security reasons, scalability and processing power.

Option A: Packet Gateway notification
Option B: IP Pool Management notification
Option A: Packet Gateway notification
Option B: IP Pool Management notification

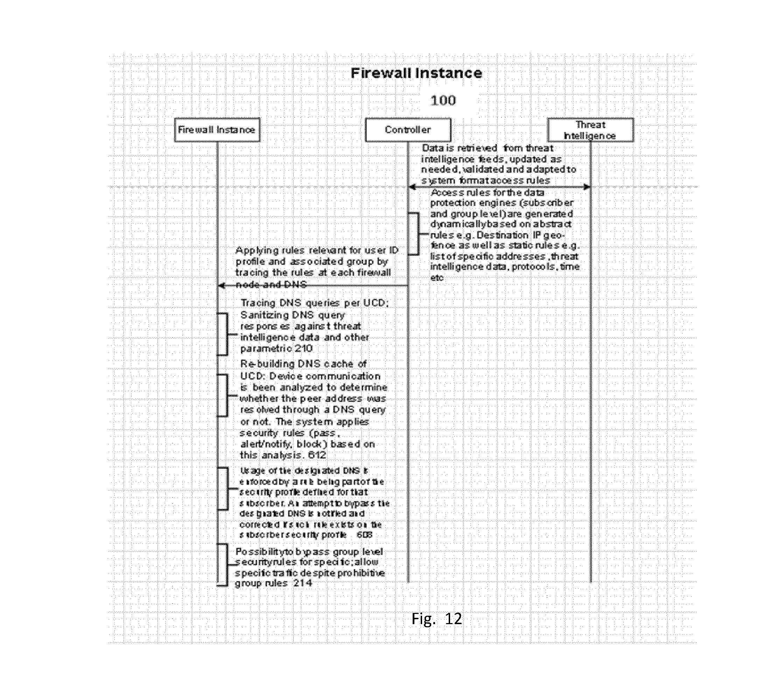

Figure 12 is a flow diagram of firewall path routing and controller actions, according to some embodiments of the present invention.

The firewall path routing and controller actions comprise at least one of the following steps:
Applying rules relevant for user ID profile and associated group by tracing the rules at each firewall node and DNS;
Tracing DNS queries per UCD; Sanitizing DNS query responses against threat intelligence data and other parametric 210;
Re-building DNS cache of UCD: Device communication is been analyzed to determine whether the peer address was resolved through a DNS query or not. The system applies security rules (pass, alert/notify, block) based on this analysis. 612
Usage of the designated DNS is enforced by a rule being part of the security profile defined for that subscriber. An attempt to bypass the designated DNS is notified and corrected if such rule exists on the subscriber security profile 608
Possibility to bypass group level security rules for specific; allow specific traffic despite prohibitive group rules 214
   Data is retrieved from threat intelligence feeds, updated as needed, validated and adapted to system format access rules;
Access rules for the data protection engines (subscriber and group level) are generated dynamically based on abstract rules e.g. Destination IP geo-fence as well as static rules e.g. list of specific addresses, threat intelligence data, protocols, time etc.

DNS specific data is retrieved from threat intelligence feeds, updated as needed, validated and adapted to system format access rules.

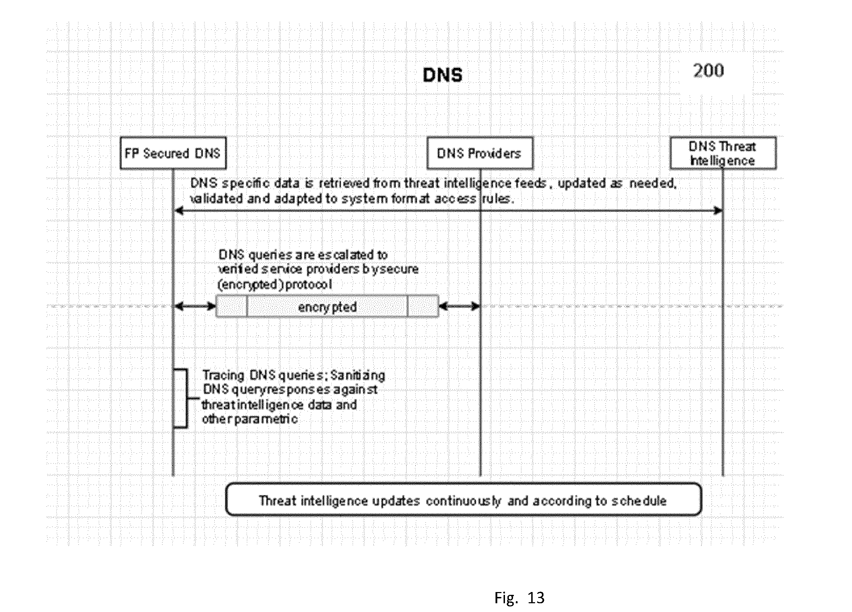

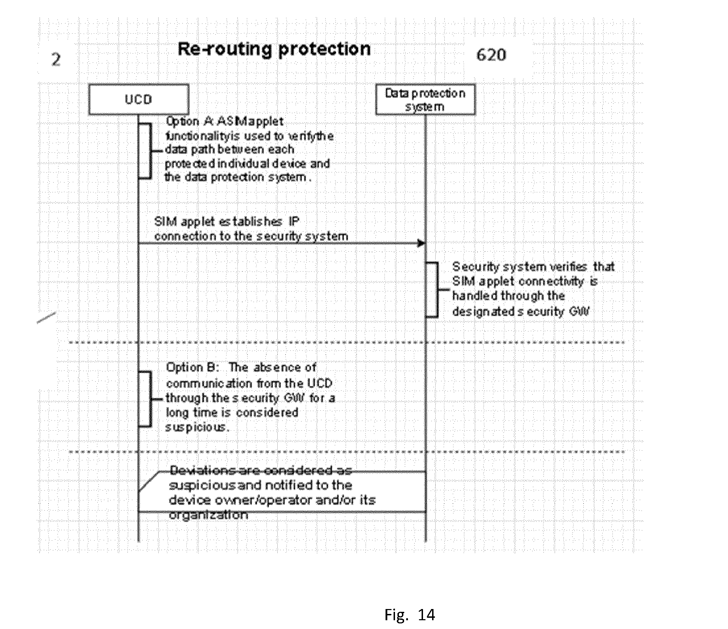

DNS queries are escalated to verified service providers by secure (encrypted) protocol
Tracing DNS queries; Sanitizing DNS query responses against threat intelligence data and other parametric
Figure 13 is a flow diagram of the action performed by the DNS, according to some embodiments of the present invention
Option A: Packet Gateway notification
Option B: IP Pool Management notification
DNS queries are escalated to verified service providers by secure (encrypted) protocol
Tracing DNS queries; Sanitizing DNS query responses against threat intelligence data and other parametric
Threat intelligence updates continuously and according to schedule
Figure 14 is a flow diagram of routing secured message action between the UCD and the data protection system according to the configuration of fig 3, according to some embodiments of the present invention.

The routing secured message action between the UCD and the data protection system, comprise one if the following steps:
Option A: A SIM applet functionality is used to verify the data path between each protected individual device and the data protection system.
SIM applet establishes IP connection to the security system
Security system verifies that SIM applet connectivity is handled through the designated security GW
Option B: The absence of communication from the UCD through the security GW for a long time is considered suspicious.
Deviations are considered as suspicious and notified to the device owner/operator and/or its organization.

The system of the present invention may include, according to certain embodiments of the invention, machine readable memory containing or otherwise storing a program of instructions which, when executed by the machine, implements some or all of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention. Any of the teachings incorporated herein may wherever suitably operate on signals representative of physical objects or substances.

Unless specifically stated otherwise, as apparent from the following discussions, it is appreciated that throughout the specification discussions, utilizing terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining" or the like, refer to the action and/or processes of a computer or computing system, or processor or similar electronic computing device, that manipulate and/or transform data represented as physical, such as electronic, quantities within the computing system's registers and/or memories, into other data similarly represented as physical quantities within the computing system's memories, registers or other such information storage, transmission or display devices. The term "computer" should be broadly construed to cover any kind of electronic device with data processing capabilities, including, by way of non-limiting example, personal computers, servers, computing system, communication devices, processors (e.g. digital signal processor (DSP), microcontrollers, field programmable gate array (FPGA), application specific integrated circuit (ASIC), etc.) and other electronic computing devices.

The present invention may be described, merely for clarity, in terms of terminology specific to particular programming languages, operating systems, browsers, system versions, individual products, and the like. It will be appreciated that this terminology is intended to convey general principles of operation clearly and briefly, by way of example, and is not intended to limit the scope of the invention to any particular programming language, operating system, browser, system version, or individual product.

It is appreciated that software components of the present invention including programs and data may, if desired, be implemented in ROM (read only memory) form including CD-ROMs, EPROMs and EEPROMs, or may be stored in any other suitable typically non-transitory computer-readable medium such as but not limited to disks of various kinds, cards of various kinds and RAMs. Components described herein as software may, alternatively, be implemented wholly or partly in hardware, if desired, using conventional techniques. Conversely, components described herein as hardware may, alternatively, be implemented wholly or partly in software, if desired, using conventional techniques.

Included in the scope of the present invention, inter alia, are electromagnetic signals carrying computer-readable instructions for performing any or all of the steps of any of the methods shown and described herein, in any suitable order; machine-readable instructions for performing any or all of the steps of any of the methods shown and described herein, in any suitable order; program storage devices readable by machine, tangibly embodying a program of instructions executable by the machine to perform any or all of the steps of any of the methods shown and described herein, in any suitable order; a computer program product comprising a computer useable medium having computer readable program code, such as executable code, having embodied therein, and/or including computer readable program code for performing, any or all of the steps of any of the methods shown and described herein, in any suitable order; any technical effects brought about by any or all of the steps of any of the methods shown and described herein, when performed in any suitable order; any suitable apparatus or device or combination of such, programmed to perform, alone or in combination, any or all of the steps of any of the methods shown and described herein, in any suitable order; electronic devices each including a processor and a cooperating input device and/or output device and operative to perform in software any steps shown and described herein; information storage devices or physical records, such as disks or hard drives, causing a computer or other device to be configured so as to carry out any or all of the steps of any of the methods shown and described herein, in any suitable order; a program pre-stored e.g. in memory or on an information network such as the Internet, before or after being downloaded, which embodies any or all of the steps of any of the methods shown and described herein, in any suitable order, and the method of uploading or downloading such, and a system including server/s and/or client/s for using such; and hardware which performs any or all of the steps of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any step described herein may be computer-implemented. The invention shown and described herein may include (a) using a computerized method to identify a solution to any of the problems or for any of the objectives described herein, the solution optionally include at least one of a decision, an action, a product, a service or any other information described herein that impacts, in a positive manner, a problem or objectives described herein; and (b) outputting the solution.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Features of the present invention which are described in the context of separate embodiments may also be provided in combination in a single embodiment.

For example, a system embodiment is intended to include a corresponding process embodiment. Also, each system embodiment is intended to include a server-centered "view" or client centered "view", or "view" from any other node of the system, of the entire functionality of the system, computer-readable medium, apparatus, including only those functionalities performed at that server or client or node.

The present invention provides a method for securing the data communication of cellular network subscribers using a security service, comprising:
- associating subscribers listed to the security service with a group.
   wherein the group association for each subscriber is determined a-priory, based on the identity of the subscriber, or dynamically, based on the communication pattern of the subscriber;
- Configuring the cellular network connectivity to the public PDN with security GW, the data flow of the subscriber's service is routed through the security GW;
- applying plurality security rules comprising group related rules and individual related rules associated with by the security GW; wherein plurality of the security rules applied in the security GW are implemented in two layers: a first layer is determined by the individual identity of the subscriber and a second layer is based on the group to which the subscriber is associated.

## Claims

1. A method for securing the data communication of cellular network subscribers using a security service, said method comprising:
- associating subscribers listed to the security service with a plurality of groups;
- wherein the groups are either pre-defined or created ad hoc or based on User Cellular Device ,UCD, profile for applying destination-based protection;
- configuring the cellular network connectivity to the public data network, PDN, with at least one security gateway, GW, such that data flow of the subscribers listed to the security service is routed through the at least one security GW;
- applying plurality of security rules comprising group related rules and individual related rules associated with at least one the security GW, wherein the security rules are configured for inspecting the data communication and determining if to block or allow the data communication;
wherein plurality of the security rules applied in the security GW are implemented in two layers: a first layer which is determined by the individual identity of the subscriber and a second layer which is based on the group to which the subscriber is associated;
wherein the plurality of security profiles are defined for the subscriber and the associated groups and are applied to the firewall nodes along the routing path and applied to data flow traversing in either direction along that path;
wherein the personal and group firewall nodes are arranged in a graph structure of multiple nodes, each node including a specific security rule from the plurality of the security rules, wherein by specifying a path through the graph structure a sequence of rules from a specific request of a user is tested;
wherein the groups are clustered based on parameters distinction of the applied security features of each sub-set group;
applying the plurality of security rules for user's profile and associated group by tracing the rules at each firewall node.

2. The method of claim 1 wherein the group association for subscriber is determined dynamically, based on the communication pattern of the subscriber or a-priory based on the identity of the subscriber or device type specific or device owner specific.

3. The method of claim 1 wherein the security rules are implemented on virtualized computing entities in a swarm deployment of firewall nodes.

4. The method of claim 1 wherein the plurality of security rules are associated with group and/or individual rules for the data protection engines, are generated dynamically based on abstract rules including at least one of destination IP geo fence, and/or are static rules including at least one of list of specific addresses, protocols or time.

5. The method of claim 1 in which the security GW is connected to feeds of threat intelligence providers wherein the data retrieved from the feeds are validated and adapted to the system format, wherein the threat intelligence feed source can be selected on individual and as well as group level.

6. The method of claim 1, in which domain name server, DNS, based protection is applied by
supplying DNS services to the devices listed to the protection service.
wherein the usage of the designated DNS is enforced by a rule being part of the security profile defined for that subscriber, such that an attempt to bypass the designated DNS is notified and corrected if such rule exists on the subscriber security profile.

7. The method of claim 6 wherein the system rebuilds a DNS cache individually for the subscriber based on the individual DNS traffic analyzed by the system, wherein device communication is been analyzed passively to determine whether the peer address was resolved through a DNS query or not, wherein the system applies security rules including at least one of pass, alert/notify, block.

8. The method of claim 7 wherein the DNS queries are escalated to verified service providers by secure protocol and the DNS query response is sanitized by the system.

9. A system for securing the data communication of cellular network subscribers using a security service, said system comprised of:
- a controller (100) configured for identifying client profile and associated groups Managing the address assigned to each of the UCD and determines personal and customized rules;
- at least one security GW (414) for configuring the cellular network connectivity to the public PDN with, such that data flow of the subscribers listed to the security service is routed through the at least one security GW;
- group and personal firewalls (52, 54) for applying plurality of security rules comprising group related rules and individual related rules associated with at least one the security GW, wherein the security rules are configured for inspecting the data communication and determining if to block or allow the data communication;
wherein plurality of the security rules applied in the security GW are implemented in two layers: a first layer which is determined by the individual identity of the subscriber and a second layer which is based on the group to which the subscriber is associated;
wherein the system is configured to apply security rules for user's profile and associated group by tracing the rules at each firewall node;
wherein the plurality of security profiles are defined for the subscriber and the associated groups, are applied to the firewall nodes along the routing path and applied to data flow traversing in either direction along that path;
wherein the personal and group firewall nodes are arranged in a graph structure of multiple nodes, each node including a
specific security rule from the plurality of the security rules. wherein by specifying a path through the graph structure a sequence of rules from a specific request of a user is tested;
Wherein the groups are clustered, based on parameters distinction of the applied security features of each sub-set group.

10. The system of claim 9, wherein the group association for subscriber is determined dynamically, based the communication pattern of the subscriber.

11. The system of claim 9 wherein the group association per subscriber is determined a-priory based on the identity of the subscriber or device type specific or device owner specific, usage type.

12. The system of claim 9 wherein the security rules are implemented on virtualized computing entities in a swarm deployment of firewalls nodes.

13. The system of claim 9 wherein the security profiles are defined for the subscriber and its group are applied to the firewall nodes along the routing path and applied to data traversing in either direction along that path.

## Patentansprüche

1. Verfahren zum Sichern der Datenkommunikation von Teilnehmern eines Mobilfunknetzes unter Verwendung eines Sicherheitsdienstes, wobei das Verfahren umfasst:
- Zuordnen von bei dem Sicherheitsdienst registrierten Teilnehmern zu einer Vielzahl von Gruppen;
- wobei die Gruppen entweder vordefiniert oder ad hoc erstellt sind oder zum Anwenden eines zielbasierten Schutzes auf einem Profil eines Benutzer-Mobilfunkgeräts, UCD, basieren;
- Konfigurieren der Mobilfunknetzkonnektivität zu dem öffentlichen Datennetz, PDN, mit mindestens einem Sicherheits-Gateway, GW, derart, dass ein Datenfluss der bei dem Sicherheitsdienst registrierten Teilnehmer durch das mindestens eine Sicherheits-GW geleitet wird;
- Anwenden einer Vielzahl von Sicherheitsregeln umfassend gruppenbezogene Regeln und individualbezogene Regeln, die dem mindestens einen Sicherheits-GW zugeordnet sind, wobei die Sicherheitsregeln dazu eingerichtet sind, die Datenkommunikation zu untersuchen und zu bestimmen, ob die Datenkommunikation zu blockieren oder zuzulassen ist;
wobei eine Vielzahl der in dem Sicherheits-GW angewendeten Sicherheitsregeln in zwei Schichten implementiert ist: eine erste Schicht, die durch die individuelle Identität des Teilnehmers bestimmt wird, und eine zweite Schicht, die auf der Gruppe basiert, der der Teilnehmer zugeordnet ist;
wobei die Vielzahl von Sicherheitsprofilen für den Teilnehmer und die zugeordneten Gruppen definiert ist und auf die Firewall-Knoten entlang des Routing-Pfads angewendet wird und auf einen Datenfluss angewendet wird, der in beliebiger Richtung entlang dieses Pfades verläuft;
wobei die persönlichen und Gruppen-Firewall-Knoten in einer Graphstruktur aus mehreren Knoten angeordnet sind, wobei jeder Knoten eine spezifische Sicherheitsregel aus der Vielzahl der Sicherheitsregeln umfasst, wobei durch Spezifizieren eines Pfads durch die Graphstruktur eine Abfolge von Regeln aus einer spezifischen Anfrage eines Benutzers geprüft wird;
wobei die Gruppen basierend auf einer Parameterunterscheidung der angewendeten Sicherheitsmerkmale jeder Untergruppe geclustert werden;
Anwenden der Vielzahl von Sicherheitsregeln für das Profil des Benutzers und die zugeordnete Gruppe durch Nachverfolgen der Regeln an jedem Firewall-Knoten.

2. Verfahren nach Anspruch 1, wobei die Gruppenzuordnung für einen Teilnehmer dynamisch basierend auf dem Kommunikationsmuster des Teilnehmers oder a priori basierend auf der Identität des Teilnehmers oder gerätetypspezifisch oder geräteeigentümerspezifisch bestimmt wird.

3. Verfahren nach Anspruch 1, wobei die Sicherheitsregeln auf virtualisierten Recheneinheiten in einer Schwarmbereitstellung von Firewall-Knoten implementiert sind.

4. Verfahren nach Anspruch 1, wobei die Vielzahl von Sicherheitsregeln Gruppen- und/oder individuellen Regeln für die Datenschutz-Engines zugeordnet ist, dynamisch basierend auf abstrakten Regeln erzeugt wird, die mindestens eines von einem Ziel-IP-Geofence umfassen, und/oder statische Regeln sind, die mindestens eines von einer Liste spezifischer Adressen, Protokolle oder einer Zeit umfassen.

5. Verfahren nach Anspruch 1, bei dem das Sicherheits-GW mit Feeds von Bedrohungsaufklärungsanbietern verbunden ist, wobei die aus den Feeds abgerufenen Daten validiert und an das Systemformat angepasst werden, wobei die Quelle der Bedrohungsaufklärungs-Feeds sowohl auf individueller Ebene als auch auf Gruppenebene ausgewählt werden kann.

6. Verfahren nach Anspruch 1, bei dem ein auf einem Domain Name Server, DNS, basierender Schutz angewendet wird durch
Bereitstellen von DNS-Diensten für die bei dem Schutzdienst registrierten Geräte.
wobei die Verwendung des vorgesehenen DNS durch eine Regel erzwungen wird, die Teil des für diesen Teilnehmer definierten Sicherheitsprofils ist, derart, dass ein Versuch, den vorgesehenen DNS zu umgehen, gemeldet und korrigiert wird, wenn eine solche Regel in dem Teilnehmer-Sicherheitsprofil vorhanden ist.

7. Verfahren nach Anspruch 6, wobei das System einen DNS-Cache individuell für den Teilnehmer basierend auf dem durch das System analysierten individuellen DNS-Verkehr neu aufbaut, wobei Gerätekommunikation passiv analysiert wird, um zu bestimmen, ob die Peer-Adresse durch eine DNS-Abfrage aufgelöst wurde oder nicht, wobei das System Sicherheitsregeln anwendet, die mindestens eines von Durchlassen, Alarmieren/Melden, Blockieren umfassen.

8. Verfahren nach Anspruch 7, wobei die DNS-Abfragen durch ein sicheres Protokoll an verifizierte Diensteanbieter eskaliert werden und die DNS-Abfrageantwort durch das System bereinigt wird.

9. System zum Sichern der Datenkommunikation von Teilnehmern eines Mobilfunknetzes unter Verwendung eines Sicherheitsdienstes, wobei das System umfasst:
- eine Steuerung (100), die dazu eingerichtet ist, ein Client-Profil und zugeordnete Gruppen zu identifizieren, die jedem der UCD zugewiesene Adresse zu verwalten, und die persönliche und angepasste Regeln bestimmt;
- mindestens ein Sicherheits-GW (414) zum Konfigurieren der Mobilfunknetzkonnektivität zu dem öffentlichen PDN derart, dass ein Datenfluss der bei dem Sicherheitsdienst registrierten Teilnehmer durch das mindestens eine Sicherheits-GW geleitet wird;
- Gruppen- und persönliche Firewalls (52, 54) zum Anwenden einer Vielzahl von Sicherheitsregeln umfassend gruppenbezogene Regeln und individualbezogene Regeln, die dem mindestens einen Sicherheits-GW zugeordnet sind, wobei die Sicherheitsregeln dazu eingerichtet sind, die Datenkommunikation zu untersuchen und zu bestimmen, ob die Datenkommunikation zu blockieren oder zuzulassen ist;
wobei eine Vielzahl der in dem Sicherheits-GW angewendeten Sicherheitsregeln in zwei Schichten implementiert ist: eine erste Schicht, die durch die individuelle Identität des Teilnehmers bestimmt wird, und eine zweite Schicht, die auf der Gruppe basiert, der der Teilnehmer zugeordnet ist;
wobei das System dazu eingerichtet ist, Sicherheitsregeln für das Profil des Benutzers und die zugeordnete Gruppe durch Nachverfolgen der Regeln an jedem Firewall-Knoten anzuwenden;
wobei die Vielzahl von Sicherheitsprofilen für den Teilnehmer und die zugeordneten Gruppen definiert ist, auf die Firewall-Knoten entlang des Routing-Pfads angewendet wird und auf einen Datenfluss angewendet wird, der in beliebiger Richtung entlang dieses Pfades verläuft;
wobei die persönlichen und Gruppen-Firewall-Knoten in einer Graphstruktur aus mehreren Knoten angeordnet sind, wobei jeder Knoten eine spezifische Sicherheitsregel aus der Vielzahl der Sicherheitsregeln umfasst,
wobei durch Spezifizieren eines Pfads durch die Graphstruktur eine Abfolge von Regeln aus einer spezifischen Anfrage eines Benutzers geprüft wird;
wobei die Gruppen basierend auf einer Parameterunterscheidung der angewendeten Sicherheitsmerkmale jeder Untergruppe geclustert werden.

10. System nach Anspruch 9, wobei die Gruppenzuordnung für einen Teilnehmer dynamisch basierend auf dem Kommunikationsmuster des Teilnehmers bestimmt wird.

11. System nach Anspruch 9, wobei die Gruppenzuordnung je Teilnehmer a priori basierend auf der Identität des Teilnehmers oder gerätetypspezifisch oder geräteeigentümerspezifisch, nutzungstypspezifisch bestimmt wird.

12. System nach Anspruch 9, wobei die Sicherheitsregeln auf virtualisierten Recheneinheiten in einer Schwarmbereitstellung von Firewall-Knoten implementiert sind.

13. System nach Anspruch 9, wobei die Sicherheitsprofile für den Teilnehmer und seine Gruppe definiert sind, auf die Firewall-Knoten entlang des Routing-Pfads angewendet werden und auf Daten angewendet werden, die in beliebiger Richtung entlang dieses Pfades laufen.

## Revendications

1. Méthode destinée à sécuriser la communication de données d'abonnés de réseau cellulaire en utilisant un service de sécurité, ladite méthode comprenant les étapes suivantes :
- associer les abonnés répertoriés auprès du service de sécurité à une pluralité de groupes ;
- dans laquelle les groupes sont soit prédéfinis, soit créés ad hoc, soit basés sur un profil de dispositif cellulaire d'utilisateur, UCD, pour appliquer une protection basée sur la destination ;
- configurer la connectivité de réseau cellulaire au réseau de données, PDN, public, à l'aide d'au moins une passerelle, GW, de sécurité de sorte que le flux de données des abonnés répertoriés auprès du service de sécurité soit acheminé via l'au moins une GW de sécurité ;
- appliquer une pluralité de règles de sécurité comprenant des règles liées au groupe et des règles liées à l'individu associées à l'au moins une GW de sécurité, dans laquelle les règles de sécurité sont configurées pour inspecter la communication de données et déterminer s'il faut bloquer ou autoriser la communication de données ;
dans laquelle la pluralité de règles de sécurité appliquées dans la GW de sécurité sont mises en œuvre dans deux couches : une première couche qui est déterminée par l'identité individuelle de l'abonné et une deuxième couche qui est basée sur le groupe auquel l'abonné est associé ;
dans laquelle la pluralité de profils de sécurité sont définis pour l'abonné et les groupes associés et sont appliqués aux nœuds de pare-feu situés le long du chemin de routage ainsi qu'au flux de données circulant dans les deux sens le long de ce chemin ;
dans laquelle les nœuds de pare-feu personnels et de groupe sont agencés dans une structure de graphe de multiples nœuds, chaque nœud comportant une règle de sécurité spécifique de la pluralité de règles de sécurité, dans laquelle, en spécifiant un chemin à travers la structure de graphe, une séquence de règles d'une demande spécifique d'un utilisateur est testée ;
dans laquelle les groupes sont mis en grappe sur la base d'une distinction de paramètres des fonctionnalités de sécurité appliquées de chaque groupe de sous-ensemble ;
appliquer la pluralité de règles de sécurité au profil de l'utilisateur et au groupe associé en suivant les règles au niveau de chaque nœud de pare-feu.

2. Méthode selon la revendication 1, dans laquelle l'association de groupe pour un abonné est déterminée de manière dynamique sur la base du motif de communication de l'abonné, ou est déterminée a priori sur la base de l'identité de l'abonné ou [du type d'utilisation] propre au type de dispositif ou au propriétaire de dispositif.

3. Méthode selon la revendication 1, dans laquelle les règles de sécurité sont mises en œuvre sur des entités informatiques virtualisées dans un déploiement en essaim des nœuds de pare-feu.

4. Méthode selon la revendication 1, dans laquelle la pluralité de règles de sécurité sont associées à des règles de groupe et/ou individuelles pour les moteurs de protection des données, sont générées de manière dynamique sur la base de règles abstraites comportant au moins un parmi un géorepérage IP de destination et/ou sont des règles statiques comportant une liste d'adresses spécifiques, des protocoles et/ou des valeurs temporelles.

5. Méthode selon la revendication 1, dans laquelle la GW de sécurité est connectée à des flux provenant de fournisseurs de renseignements sur les menaces, dans laquelle les données récupérées de ces flux sont validées et adaptées au format de système, dans laquelle la source de flux de renseignements sur les menaces peut être sélectionnée tant au niveau individuel qu'au niveau du groupe.

6. Méthode selon la revendication 1, dans laquelle une protection basée sur serveur de noms de domaine, DNS, est appliquée en fournissant des services DNS aux dispositifs répertoriés auprès du service de protection,
dans laquelle l'utilisation du DNS désigné est imposée par une règle faisant partie du profil de sécurité défini pour cet abonné, de sorte qu'une tentative de contournement du DNS désigné soit signalée et corrigée si une telle règle figure dans le profil de sécurité d'abonné.

7. Méthode selon la revendication 6, dans laquelle le système reconstitue un cache DNS individuellement pour l'abonné sur la base du trafic DNS individuel analysé par le système, dans laquelle la communication de dispositif est analysée de manière passive afin de déterminer si l'adresse du pair a été résolue par une requête DNS ou non, dans laquelle le système applique des règles de sécurité comportant au moins l'un des cas suivants « passage », « alerte/notification », « blocage ».

8. Méthode selon la revendication 7, dans laquelle les requêtes DNS sont réaffectées à des fournisseurs de services vérifiés via un protocole sécurisé et la réponse à la requête DNS est nettoyée par le système.

9. Système destiné à sécuriser la communication de données d'abonnés de réseau cellulaire en utilisant un service de sécurité, ledit système comprenant :
- un contrôleur (100) configuré pour identifier un profil de client et des groupes associés, gérer l'adresse attribuée à chacun des UCD et déterminer des règles personnelles personnalisées ;
- au moins une GW de sécurité (414) pour configurer la connectivité de réseau cellulaire au PDN public de sorte que le flux de données des abonnés répertoriés auprès du service de sécurité soit acheminé via l'au moins une GW de sécurité ;
- des pares-feux de groupe et personnels (52, 54) pour appliquer une pluralité de règles de sécurité comprenant des règles liées au groupe et des règles liées à l'individu associées à l'au moins une GW de sécurité, dans lequel les règles de sécurité sont configurées pour inspecter la communication de données et déterminer s'il faut bloquer ou autoriser la communication de données ;
dans lequel la pluralité de règles de sécurité appliquées dans la GW de sécurité sont mises en œuvre dans deux couches : une première couche qui est déterminée par l'identité individuelle de l'abonné et une deuxième couche qui est basée sur le groupe auquel l'abonné est associé ;
dans lequel le système est configuré pour appliquer les règles de sécurité au profil de l'utilisateur et au groupe associé en suivant les règles au niveau de chaque nœud de pare-feu ;
dans lequel la pluralité de profils de sécurité sont définis pour l'abonné et les groupes associés et sont appliqués aux nœuds de pare-feu situés le long du chemin de routage ainsi qu'au flux de données circulant dans les deux sens le long de ce chemin ;
dans lequel les nœuds de pare-feu personnels et de groupe sont agencés dans une structure de graphe de multiples nœuds, chaque nœud comportant une règle de sécurité spécifique de la pluralité de règles de sécurité,
dans lequel, en spécifiant un chemin à travers la structure de graphe, une séquence de règles d'une demande spécifique d'un utilisateur est testée ;
dans lequel les groupes sont mis en grappe sur la base d'une distinction de paramètres des fonctionnalités de sécurité appliquées de chaque groupe de sous-ensemble.

10. Système selon la revendication 9, dans lequel l'association de groupe pour un abonné est déterminée de manière dynamique sur la base du motif de communication de l'abonné.

11. Système selon la revendication 9, dans lequel l'association de groupe par abonné est déterminée a priori sur la base de l'identité de l'abonné ou du type d'utilisation propre au type de dispositif ou au propriétaire de dispositif.

12. Système selon la revendication 9, dans lequel les règles de sécurité sont mises en œuvre sur des entités informatiques virtualisées dans un déploiement en essaim des nœuds de pare-feu.

13. Système selon la revendication 9, dans lequel les profils de sécurité sont définis pour l'abonné et son groupe et sont appliqués aux nœuds de pare-feu situés le long du chemin de routage ainsi qu'aux données circulant dans les deux sens le long de ce chemin.
